# EUROPEAN PATENT APPLICATION

(11) **EP 1 705 904 A1**
(43) Date of publication of application: **27.09.2006**
(21) Application number: 04820531.4
(22) Date of filing: 09.12.2004
(51) Int. Cl.: H04N 5/44

(54) **MOBILE TERMINAL DEVICE AND TELEVISION PROGRAM WATCHING SYSTEM USING THE SAME**

(30) Priority: 17.12.2003 JP 2003419093
(71) Applicant: MATSUSHITA ELECTRIC INDUSTRIAL CO., LTD., Osaka 571-8501 (JP)
(72) Inventor: SUGA, Hidenori c/o Matsushita El. Ind. Co, Ltd., Chuo-ku, Osaka-shi, Osaka 540-6319 (JP); AIKAWA, Takayuki c/o Matsushita El. Ind. Co, Ltd., Chuo-ku, Osaka-shi, Osaka 540-6319 (JP); OHBA, Kohki c/o Matsushita El. Ind. Co., Ltd., Chuo-ku, Osaka-shi, Osaka 540-6319 (JP); KAMIMOTO, Akatsuki c/o Matsushita El. Ind Co, Ltd., Chuo-ku, Osaka-shi, Osaka 540-6319 (JP); KATO, Reiko c/o Matsushita Electric Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/018371
(87) International publication number: WO 2005/060245

(57) **Abstract**

There are provided a mobile terminal device that makes it possible for a user to watch easily the continuation of a television program by using a television receiving/recording/ playing equipment provided separately even when user's reception is interrupted halfway while the user receives the television program where the user has gone to, and a television program watching system using the same. A mobile terminal device is constructed to include a television receiving portion for receiving a television program, a storing portion for storing any time and any channel of the television program received by the television receiving portion as a bookmark, and a transferring portion for transferring the bookmark stored in the storing portion to a television receiving/recording/playing equipment provided separately, wherein a user watches the received television program based on the bookmark by using the television receiving/recording/ playing equipment provided separately. Accordingly, the user can store any time and any channel as the bookmark in the mobile terminal device while the user receives the television program, then transfer the bookmarks to the television receiving/ recording/playing equipment provided separately, and then watch exactly the contents of the television program from that time by using the television receiving/recording/playing equipment on a basis of the bookmark.

## Description

### Technical Field

The present invention relates to a mobile terminal device capable of receiving a television program and a television program watching system using the same.

### Background Art

In the prior art, various functions such as an electronic mail, the Internet, and others as well as a telephone function are provided to the cellular phone. In particular, various types of cellular phones equipped with a camera, a television receiver, and the like are marketed recently.

Meanwhile, in the home DVD recorder that records or plays the television program, such a DVD recorder is known that a bookmark can be put arbitrarily in any position and contents of the television program recorded on the DVD recorder can be searched arbitrarily based on the bookmark to play (see Patent Literature 1).

According to this DVD recorder, a bookmark function can assist the user's watching operation, and thus the user can watch effectively a predetermined program from a predetermined location. If the bookmark was put in the program that the user watched in the middle last time, the user can watch easily this program when he or she wishes to watch such program successively next time. If the bookmark is put in the important scene, the user can search easily this scene and watch it when he or she wishes to watch such scene later once again. Various advantages mentioned as above can be achieved.

Patent Literature 1: JP-A-2002-44586 (Page 2, Fig.2)

### Disclosure of the Invention

### Problems that the Invention is to Solve

However, the DVD recorder set forth in Patent Literature 1 and known in the prior art is constructed such that a bookmark list is prepared in the DVD recorder merely and then bookmarks registered in the list are used. In this case, the user must operate a bookmark-adding button provided to this DVD recorder when such user registers a bookmark.

Therefore, even in the condition that the user has recorded in advance all television programs on that day by using the DVD recorder, such a problem existed that, when user's watching of the television program is interrupted in the middle, or the like while the user receives a part of the television programs by using a cellular phone, or the like where the user has gone to, the user must still perform a troublesome cuing operation to watch the continuation of the television program by using the DVD recorder, or the like after he or she returns home.

The present invention has been made in view of the above problems in the prior art, and it is an object of the present invention to provide a mobile terminal device that makes it possible for a user to watch easily the continuation of a television program by using a television receiving/recording/ playing equipment provided separately even when user's reception is interrupted halfway while the user receives the television program where the user has gone to, and a television program watching system using the same.

### Means for Solving the Problems

A mobile terminal device of the present invention includes a television receiving portion that receives a television program, a storing portion that stores any time and any channel of the television program received by the television receiving portion as a bookmark, and a transferring portion that transfers the bookmark stored in the storing portion to a television receiving/recording/playing equipment provided separately. A user enables to watch the received television program based on the bookmark by using the television receiving/recording/playing equipment provided separately.

According to this configuration, such an effect can be achieved that, when the user receives the television program by the mobile terminal device and stores any time and any channel in the mobile terminal device as the bookmark in this state, such user can watch contents of the television program precisely from the stored time on a basis of the bookmark by transferring the bookmark to the television receiving/recording/playing equipment after the user returns home in a situation that the contents of the television program have already been recorded in the television receiving/recording/playing equipment provided separately.

Also, the mobile terminal device of the present invention has such a configuration that, when a predetermined operation for storing the bookmark is executed while the television receiving portion receives the television program, the time and the channel used when the operation is executed are stored as the bookmark in the storing portion.

According to this configuration, such an effect can be achieved that the user can store the time as the bookmark by executing simply the operation to store the bookmark during the receiving of the television program, such configuration is very convenient for the user to play and watch the television program subsequent to that time by the television receiving/recording/ playing equipment provided separately, for example, after the user returns home.

Also, the mobile terminal device of the present invention has such a configuration that, when a television radio wave of the television program is disconnected while the television receiving portion receives the television program, the time and the channel used when the television radio wave is disconnected are stored as the bookmark in the storing portion.

According to this configuration, even when the television radio wave of the television program is disconnected during reception of the television program, the time is stored automatically as the bookmark in the mobile terminal device. Therefore, the user can play and watch the contents subsequent to that time by the television receiving/recording/playing equipment provided separately after the user returns home.

Also, the mobile terminal device of the present invention has such a configuration that, when a television radio wave is disconnected while the television receiving portion receives the television program, a time that is earlier by a predetermined time than the time when the television radio wave is disconnected and the channel are stored as the bookmark in the storing portion.

According to this configuration, the time stored as the bookmark is given by the time that is earlier by a predetermined time than the time when the television radio wave is disconnected. Therefore, the user can play and watch the television program by the television receiving/recording/ playing equipment from the position corresponding to the time that is earlier by a predetermined time and thus the user can watch the subsequent television program while recalling a part of the contents that the user watched by the mobile terminal device.

Also, a television program watching system of the present invention, includes a mobile terminal device capable of receiving a television program, and a television receiving/recording/playing equipment capable of receiving/recording/playing the television program. The mobile terminal device includes a television receiving portion that receives the television program, a storing portion that stores any time and any channel of the television program received by the television receiving portion as a bookmark, and a transferring portion that transfers the bookmark stored in the storing portion to the television receiving/recording/playing equipment provided separately. The television receiving/recording/playing equipment includes a television receiving portion that receives the television program, a recording portion that records the television program received by the television receiving portion, a receiving portion that receives the bookmark transferred from the mobile terminal device, and a playing portion that starts a play of the television program recorded in the recording portion from a position corresponding to the time stored in the bookmark based on the bookmark.

According to this configuration, such an effect can be achieved that, when the user receives the television program by the mobile terminal device and stores any time and any channel in the mobile terminal device as the bookmark in this state, such user can watch contents of the television program precisely from the stored time on a basis of the bookmark by transferring the bookmark to the television receiving/recording/playing equipment after the user returns home in a situation that the contents of the television program have already been recorded in the television receiving/recording/playing equipment provided separately.

Also, the television program watching system of the present invention has such a configuration that the playing portion starts the play of the television program from a position corresponding to a time that is earlier by a predetermined time than the time stored in the bookmark.

According to this configuration, the play of the television program is started from the position corresponding to the time that is earlier by a predetermined time than the time stored as the bookmark, and thus the user can watch the continuation of the television program while recalling a part of the contents that the user watched by the mobile terminal device.

Also, the television program watching system of the present invention has such a configuration that the storing portion stores any start time, any finish time, and any channel of the television program received by the television receiving portion as the bookmark. The playing portion plays the television program based on the bookmark while skipping a range corresponding to a time period from the start time to the finish time stored in the bookmark.

According to this configuration, when the user plays and watches the recorded television program by using the television receiving/recording/playing equipment, such user can watch the program while skipping the range from the start time to the finish time stored previously as the bookmark. For example, when the user stores as the bookmark the start time to the finish time of the commercial message, and others that the user does not wish to see, such user can watch the television program while jumping these portions.

Also, the television program watching system of the present invention has such a configuration that the storing portion stores any start time, any finish time, and any channel of the television program received by the television receiving portion as the bookmark. The playing portion plays the television program based on the bookmark while fast-forwarding a range corresponding to a time period from the start time to the finish time stored in the bookmark.

According to this configuration, when the user plays and watches the recorded television program by using the television receiving/recording/playing equipment, the user can play the television program while fast-forwarding the range corresponding to the time period from the start time to the finish time stored previously as the bookmark. For example, when the user stores as the bookmark the start time to the finish time of the commercial message, and others that the user does not wish to see, such user can watch the television program while fast-forwarding these portions.

### Advantage of the Invention

The present invention possesses such an advantage that, even if user's reception is interrupted in the middle while the user receives the television program where the user has gone to, the user can watch easily the continuation of the television program by the television receiving/recording/playing equipment provided separately.

### Brief Description of the Drawings

[FIG.1] A block diagram showing a schematic configuration of a mobile terminal device of an embodiment of the present invention.
[FIG.2] A block diagram showing a schematic configuration of a television receiving/recording/playing equipment provided separately.
[FIG.3] A flowchart showing an operation of the mobile terminal device of the embodiment of the present invention.
[FIG.4] A flowchart showing an operation of the television receiving/recording/playing equipment provided separately.
[FIG.5] A flowchart showing mutual operations of the mobile terminal device of the embodiment of the present invention and the television receiving/recording/playing equipment provided separately.

### Description of Reference Numerals

- 1: television receiving portion
- 2: radio transmitting/receiving portion
- 3: near field transmitting portion
- 4: microphone
- 5: receiver
- 6: sound input/output portion
- 7: ringtone output portion
- 8: speaker
- 9: display portion
- 10: operating portion
- 21: television receiving portion
- 22: memory portion
- 23: sound output portion
- 24: speaker
- 25: near field receiving portion
- 26: display portion
- 27: operating portion

### Best Mode for Carrying Out the Invention

A best mode for carrying out the present invention will be explained hereinafter.

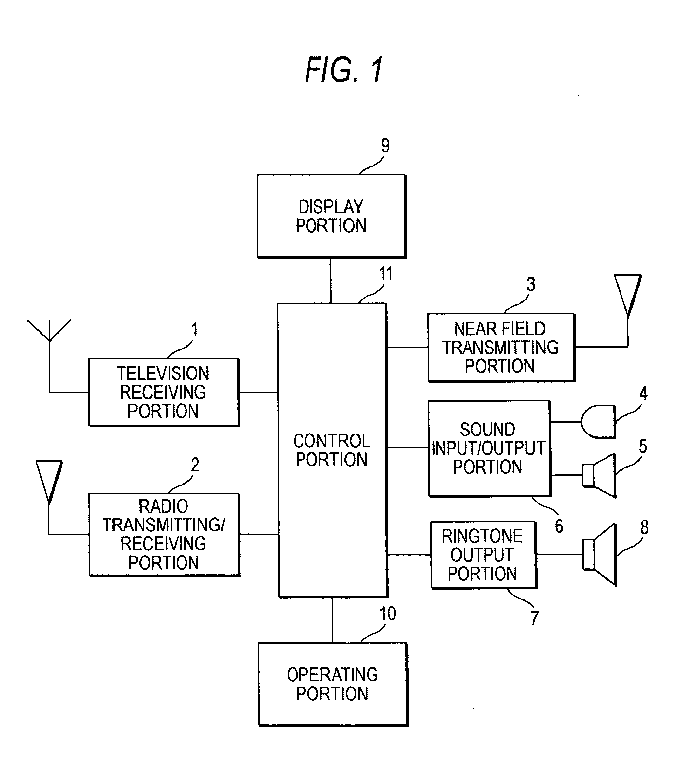

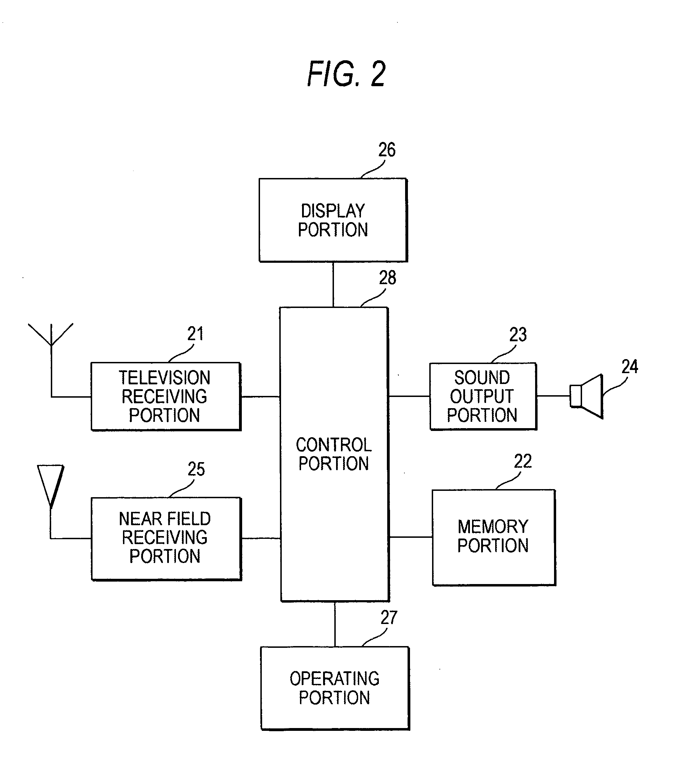

FIG.1 is a block diagram showing a schematic configuration of a mobile terminal device of an embodiment of the present invention, and FIG.2 is a block diagram showing a schematic configuration of a television receiving/recording/ playing equipment provided separately.

As shown in FIG.1, the mobile terminal device of the embodiment of the present invention includes a television receiving portion 1 for receiving the television program, a radio transmitting/receiving portion 2 used for the phone and the electronic mail, a near field transmitting portion 3 for transferring a bookmark stored in the mobile terminal device to the television receiving/recording/playing equipment provided separately, a sound input/output portion 6 connected to a microphone 4 and a receiver 5 and used in a telephone conversation, a ringtone output portion 7 used to generate a ringtone of a phone or output a television sound, a speaker 8 connected to the ringtone output portion 7, a display portion 9 for displaying various necessary video, information, etc. of the phone, the television, etc., an operating portion 10 for inputting various instructions, information, etc., and a control portion 11 for controlling these portions.

Then, the television receiving/recording/playing equipment provided separately is a home videotape recorder having a television receiving function, a DVD recorder, a hard disk recorder, or the like, for example. As shown in FIG.2, this television receiving/recording/playing equipment provided separately includes a television receiving portion 21 used to receive the television program, a memory portion 22 for storing contents of the television program received by the television receiving portion 21, a sound output portion 23 for outputting various sounds, a speaker 24 connected to the sound output portion 23, a near field receiving portion 25 for receiving the bookmark transferred from the mobile terminal device, a display portion 26 for executing various displays, an operating portion 27 for inputting various instructions and information, and a control portion 28 for controlling these portions.

Next, an operation of the mobile terminal device of the embodiment of the present invention will be explained hereunder.
First, the mobile terminal device of the embodiment of the present invention is constructed to receive arbitrarily the television program by using the television receiving portion 1 and watch it.

When the user sets the mobile terminal device in a television mode by using the operating portion 10, the television receiving portion 1 becomes its operating state under control of the control portion 11 in this mode. Then, the user can receive the television program on the cannel selected by the operating portion 10 in this state. The contents of the received television program are separated into the video and the sound respectively, and then the video is displayed on the display portion 9 and the sound is output from the speaker 8.

Also, when the user sets the mobile terminal device in a phone mode by using the operating portion 10, such user can call on the phone or send the electronic mail in this mode. In this case, the mobile terminal device is constructed in such a way that, when the user receives the phone call from the other person in the television mode, the mobile terminal device is switched automatically from the television mode to the phone mode to talk with the other person over the phone.

When the mobile terminal device is in the phone mode, the user can input the phone number of the other person by using the operating portion 10 or look up the phone number of the other person in a phone book portion (not shown) by operating predetermined operation keys, then display the phone number input by using the operating portion 10 or the phone number picked up from the phone book portion once on the display portion 9, and then send the phone number to a telephone base station (not shown) via the radio transmitting/receiving portion 2 by executing a predetermined sending operation while displaying the phone number. Then, a phone conversation line is established between the user and the person on the other end via the radio transmitting/receiving portion 2 when the other person answers a phone call from the user, and then the user can talk with the other person via the sound input/output portion 6 and the radio transmitting/receiving portion 2 by using the microphone 4 and the receiver 5.

Also, when the radio transmitting/receiving portion 2 receives the phone call from the other person, the mobile terminal device that is even in the television mode is switched automatically to the phone mode under control of the control portion 11, and the reception of the television broadcasting is temporarily interrupted. Then, a predetermined call signal is output from the ringtone output portion 7 to the speaker 8 and then a predetermined ringtone is output from the speaker 8. Then, the user can talk with the other person over the phone when the other person answers the phone call to execute predetermined operations.

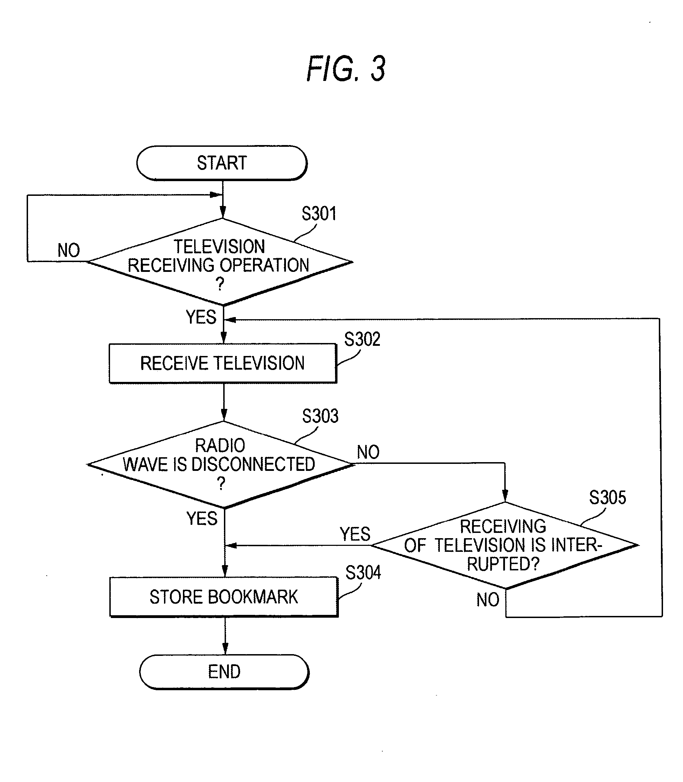

Then, in the mobile terminal device of the present embodiment, as shown in FIG.3, in a state that the user executes a television receiving operation (S301) and the mobile terminal device is receiving the television program (S302), this mobile terminal device monitors always whether or not a radio wave of the television program is disconnected (S303). As a result of the monitoring, when the radio wave of the television program is disconnected and the user could not receive the television program, the mobile terminal device stores automatically from when and on which channel the user has not received the television program, as a bookmark in a memory portion (not shown) provided in the control portion 11 (S304).

As a result of the monitoring, when the radio wave of the television program is not disconnected, the process goes to step of monitoring whether or not the user has executed an operation to interrupt the receiving of the television program (S305). If the user has not executed the operation to interrupt the receiving of the television program (N in S305), the process goes back to step of receiving the television program (S302). Then, the mobile terminal device continues to receive the television program as it is. In contrast, if the user has executed the operation to interrupt the receiving of the television program (Y in S305), the process goes to step of generating and storing the bookmark (S304). Then, the mobile terminal device stores automatically when and on which channel the user has applied the operation to interrupt the receiving of the television program, as the bookmark in the memory portion (not shown) provided in the control portion 11 (S304).

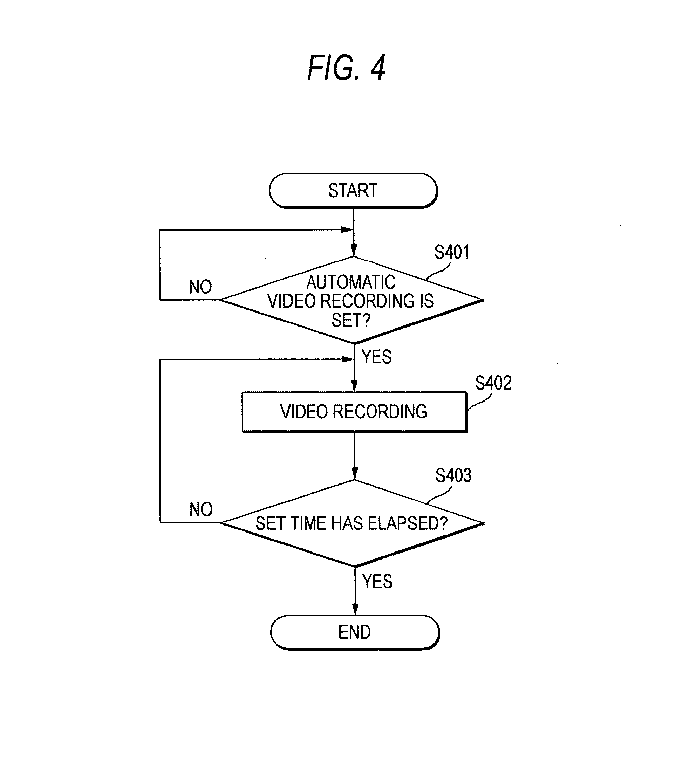

Meanwhile, in the television receiving/recording/ playing equipment provided separately, as shown in FIG.4, if start time, finish time, channel, and the like of the television program to be recorded are set in advance and then an automatic video recording is set (Y in S401), this equipment receives automatically the television program on the previously set channel from the start time and then starts a video recording (S402). Then, the video recording is continued until the previously set time has elapsed, i.e., the finish time has passed (S403). At that time, this equipment is constructed such that, although not shown, at least a channel of the recorded television program and a time that elapsed moment by moment can be recorded together with the contents of the television program.

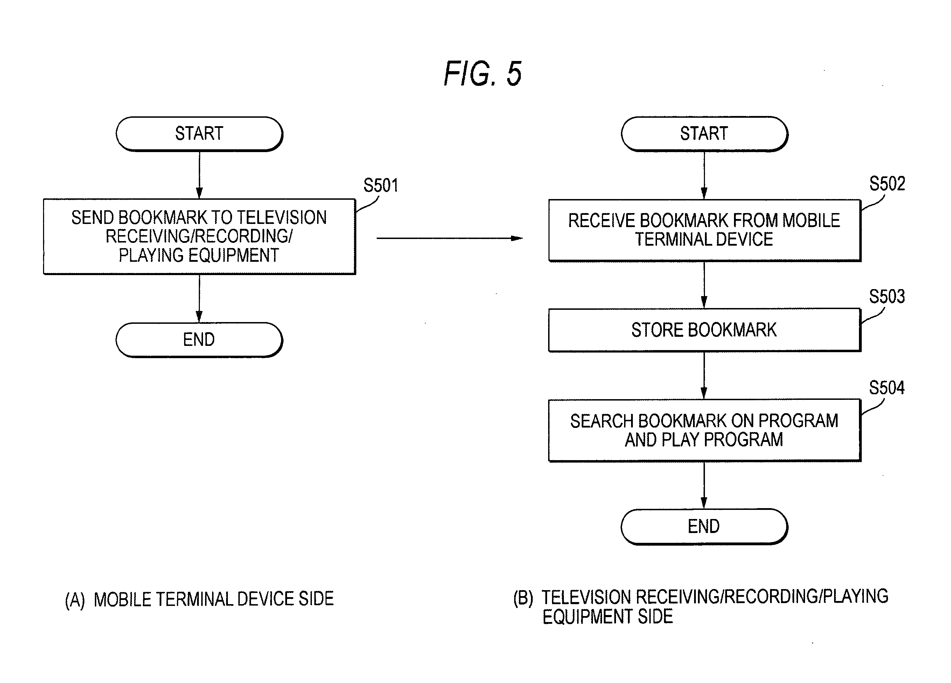

Next, as shown in FIG.5, the mobile terminal device of the present embodiment is constructed such that the bookmark stored in advance can be transferred to the television receiving/recording/playing equipment provided separately via the near field transmitting portion 3 by operating the operating portion 10. If the mobile terminal device transfers the bookmark to the television receiving/recording/playing equipment by using the near field transmitting portion 3 (S501), the television receiving/recording/playing equipment provided separately receives the transferred bookmark by using the near field receiving portion 25 (S502), and then stores the contents of the bookmark in a memory portion (not shown) provided in the control portion 28 (S503). Then, the television receiving/ recording/playing equipment executes a cuing operation based on the contents of the stored bookmark and plays the program from the cue position (S504).

For example, suppose that the user has the program that the user wish to see at all costs and the television program on a certain channel has been recorded by the television receiving/recording/playing equipment from 1 p.m. to 4 p.m. Also, suppose that the user has unexpectedly a free time where the user has gone to and watches the television program on that channel by the mobile terminal device from 1 p.m. to 2 p.m., but the user's watching of the television program on that channel is interrupted at 2 p.m. In such case, according to the present embodiment, since the time of 2 p.m. and the channel used to receive at that time are stored in the mobile terminal device as the bookmark, the user can transfer the bookmark to the television receiving/recording/playing equipment after he or she returns home. Thus, the user can watch easily the subsequent television program as the recorded picture by using the television receiving/recording/playing equipment.

Here, in the present embodiment, when either the radio wave of the television program is disconnected or the user suspends the receiving of the television program for user's self while the mobile terminal device receives the television program, the time and the channel at that time are stored as the bookmark respectively. In this case, a time that is earlier by a predetermined time, e.g., 3 minutes, than the time when the radio wave is disconnected or the user suspends the receiving of the television program for user's self may be stored as the bookmark. If doing so, the television receiving/ recording/playing equipment can play the recorded television program from 3 minutes ahead of the time when the radio wave is disconnected or the user suspends the receiving of the television program for user's self. Therefore, this configuration can have the merit such that the user can watch the subsequent picture successively while recalling the former situation.

Also, in the above mobile terminal device, the time that is earlier by a predetermined time than the time when the radio wave is disconnected or the user suspends the receiving of the television program for user's self is stored as the bookmark. In this case, such a configuration may be employed that, upon executing the cuing operation based on the bookmark in the television receiving/recording/playing equipment (S504 in FIG.5), a position that is earlier by a predetermined time than the time that is stored in the bookmark is cued.

Also, in the present embodiment, when either the radio wave of the television program is disconnected or the user suspends the receiving of the television program for user's self while the mobile terminal device receives the television program, the time and the channel at that time are stored as the bookmark respectively. In this case, such a configuration may be employed that the user can store any time and any channel as the bookmark during the receiving of the television program or at other timings by using the operating portion 10. If doing so, such advantages can be achieved that the user can store any time and any channel as the bookmark by using the operating portion 10 and the user can play easily and exactly the television program on that channel from that time by transferring such bookmarks to the television receiving/ recording/playing equipment.

Also, in the present embodiment, such a configuration is employed that, when the mobile terminal device received the phone call during the receiving of the television program, such mobile terminal device is switched to the phone mode and the receiving of the television program is temporarily broken off. In this case, such a configuration may be employed that, even when the user receives the phone call during the receiving of the television program, the receiving of the television program can be continued as it is and the user can talk on the phone in that state. If doing so, the user can talk with the person on the other end on the phone while receiving the television program. In this state, the bookmark is not automatically stored. But such a configuration may also be employed that it can be sensed that the user received the phone call or the user finished the phone conversation and then the bookmark can be automatically stored at a time of each sensing. In this event, when such a configuration is employed that the user can talk on the phone during the receiving of the television program, it is needless to say that the sound of the television program should be desirably reduced or cut off during the phone conversation.

Also, in the explanation made up to now, the number of the bookmark is not mentioned, but the number of the bookmark is not limited to one and plural bookmarks may be employed. Also, plural recordable broadcasting channels may be used at the same time in the television receiving/recording/playing equipment to record the television program. In summary, even if plural recordable broadcasting channels are present at the same time in the television receiving/recording/playing equipment, these channels can be distinguished mutually by storing the time and the channel in the bookmark as a pair, so that the broadcasting on the channel at the time, which are stored in the necessary bookmark, can be easily reproduced.

Also, in the explanation made up to now, only the time and the channel are mentioned as the bookmark. But such a configuration may be employed that the contents (digest) of the television program, the cast, the evaluation, and the like can be input or extracted manually or automatically by using information contained in the operating portion 10 or the broadcasting itself in addition to the time and the channel respectively and then stored. If constructed in this manner, the user can search the favorite television program arbitrarily in the mobile terminal device by using the contents (digest) of the television program, the cast, the evaluation, and the like stored as the bookmark, then transfer the bookmark of the television program arbitrarily to the television receiving/recording/playing equipment, and then play only the selected television program arbitrarily by the television receiving/ recording/playing equipment.

Also, in the foregoing explanation, only the program that can be played based on the time stored in the bookmark is mentioned. But such a configuration may be employed that the program is paused or fast-forwarded based on the time stored in the bookmark.

For example, such a configuration may be employed that the user can store the start time, the finish time, and the channel of the television program received by the television receiving portion in the storing portion as the bookmark, then transfer the bookmark to the television receiving/recording/playing equipment, and then play the television program based on the bookmark in the television receiving/recording/playing equipment while skipping the range corresponding to a time period from the start time to the finish time stored in the bookmark. If constructed in this manner, when the user plays and watches the recorded television program by using the television receiving/recording/playing equipment, such user can watch the program while skipping the range from the start time to the finish time stored previously as the bookmark and jump the commercial message, and others that the user does not wish to see.

Also, such a configuration may be employed that the user can store the start time, the finish time, and the channel of the television program received by the television receiving portion in the storing portion as the bookmark, then transfer the bookmark to the television receiving/recording/playing equipment, and then play the television program based on the bookmark in the television receiving/recording/playing equipment while fast-forwarding the range corresponding to a time period from the start time to the finish time stored in the bookmark. This configuration can achieve such an advantage that, when the user plays and watches the recorded television program by using the television receiving/recording/playing equipment, the user can play the television program while fast-forwarding the range corresponding to the time period from the start time to the finish time stored previously as the bookmark and thus watch the television program while fast-forwarding the commercial message, and others that the user does not wish to see.
The present invention is explained in detail with reference to the particular embodiment. But it is apparent for those skilled in the art that various variations and modifications can be applied without departing from a spirit and a scope of the present invention.
This application is based upon Japanese Patent Application No.2003-419093 filed on December 17, 2003; the contents of which are incorporated herein by reference.

### Industrial Applicability

The present invention possesses such an advantage that, even if user's reception is interrupted in the middle while the user receives a television program where the user has gone to, the user can watch easily the continuation of a television program by a television receiving/recording/playing equipment provided separately, and is useful for the mobile terminal device that makes it possible for the user to watch easily the continuation of the television program by the television receiving/recording/playing equipment provided separately even if user's reception is interrupted in the middle while the user receives the television program where the user has gone to, and the television program watching system using the same, and the like.

## Claims

1. A mobile terminal device, comprising:
a television receiving portion that receives a television program;
a storing portion that stores any time and any channel of the television program received by the television receiving portion as a bookmark; and
a transferring portion that transfers the bookmark stored in the storing portion to a television receiving/recording/playing equipment provided separately;
wherein a user enables to watch the received television program based on the bookmark by using the television receiving/recording/playing equipment provided separately.

2. The mobile terminal device according to claim 1, wherein when a predetermined operation for storing the bookmark is executed while the television receiving portion receives the television program, the time and the channel used when the operation is executed are stored as the bookmark in the storing portion.

3. The mobile terminal device according to claim 1, wherein when a television radio wave of the television program is disconnected while the television receiving portion receives the television program, the time and the channel used when the television radio wave is disconnected are stored as the bookmark in the storing portion.

4. The mobile terminal device according to claim 1, wherein when a television radio wave of the television program is disconnected while the television receiving portion receives the television program, a time that is earlier by a predetermined time than the time when the television radio wave is disconnected and the channel are stored as the bookmark in the storing portion.

5. A television program watching system, comprising:
a mobile terminal device capable of receiving a television program; and
a television receiving/recording/playing equipment capable of receiving/recording/playing the television program,
wherein the mobile terminal device includes:
a television receiving portion that receives the television program;
a storing portion that stores any time and any channel of the television program received by the television receiving portion as a bookmark; and
a transferring portion that transfers the bookmark stored in the storing portion to the television receiving/recording/playing equipment provided separately; and
wherein the television receiving/recording/playing equipment includes:
a television receiving portion that receives the television program;
a recording portion that records the television program received by the television receiving portion;
a receiving portion that receives the bookmark transferred from the mobile terminal device; and
a playing portion that starts a play of the television program recorded in the recording portion from a position corresponding to the time stored in the bookmark based on the bookmark.

6. The television program watching system according to claim 5, wherein the playing portion starts the play of the television program from a position corresponding to a time that is earlier by a predetermined time than the time stored in the bookmark.

7. The television program watching system according to claim 5, wherein the storing portion stores any start time, any finish time, and any channel of the television program received by the television receiving portion as the bookmark; and
wherein the playing portion plays the television program based on the bookmark while skipping a range corresponding to a time period from the start time to the finish time stored in the bookmark.

8. The television program watching system according to claim 5, wherein the storing portion stores any start time, any finish time, and any channel of the television program received by the television receiving portion as the bookmark; and
wherein the playing portion plays the television program based on the bookmark while fast-forwarding a range corresponding to a time period from the start time to the finish time stored in the bookmark.

## Amended claims

### Amended claims under Art. 19.1 PCT

1. (Amended) A mobile terminal device, comprising:
a television receiving portion that receives a television program;
a storing portion that stores any time and any channel of the television program received by the television receiving portion as a bookmark; and
a transferring portion that transfers the bookmark stored in the storing portion to an external equipment.

2. The mobile terminal device according to claim 1, wherein when a predetermined operation for storing the bookmark is executed while the television receiving portion receives the television program, the time and the channel used when the operation is executed are stored as the bookmark in the storing portion.

3. The mobile terminal device according to claim 1, wherein when a television radio wave of the television program is disconnected while the television receiving portion receives the television program, the time and the channel used when the television radio wave is disconnected are stored as the bookmark in the storing portion.

4. The mobile terminal device according to claim 1, wherein when a television radio wave of the television program is disconnected while the television receiving portion receives the television program, a time that is earlier by a predetermined time than the time when the television radio wave is disconnected and the channel are stored as the bookmark in the storing portion.

5. (Amended) A television program watching system, comprising:
a mobile terminal device capable of receiving a television program; and
a television receiving/recording/playing equipment capable of receiving/recording/playing the television program,
wherein the mobile terminal device includes:
a television receiving portion that receives the television program;
a storing portion that stores any time and any channel of the television program received by the television receiving portion as a bookmark; and
a transferring portion that transfers the bookmark stored in the storing portion to an external equipment; and
wherein the television receiving/recording/playing equipment includes:
a television receiving portion that receives the television program;
a recording portion that records the television program received by the television receiving portion;
a receiving portion that receives the bookmark transferred from the mobile terminal device; and
a playing portion that starts a play of the television program recorded in the recording portion from a position corresponding to the time stored in the bookmark based on the bookmark.

6. The television program watching system according to claim 5, wherein the playing portion starts the play of the television program from a position corresponding to a time that is earlier by a predetermined time than the time stored in the bookmark.

7. The television program watching system according to claim 5, wherein the storing portion stores any start time, any finish time, and any channel of the television program received by the television receiving portion as the bookmark; and
wherein the playing portion plays the television program based on the bookmark while skipping a range corresponding to a time period from the start time to the finish time stored in the bookmark.

8. The television program watching system according to claim 5, wherein the storing portion stores any start time, any finish time, and any channel of the television program received by the television receiving portion as the bookmark; and
wherein the playing portion plays the television program based on the bookmark while fast-forwarding a range corresponding to a time period from the start time to the finish time stored in the bookmark.
